# EUROPEAN PATENT SPECIFICATION

(11) **EP 4 390 764 B1**
(45) Date of publication and mention of the grant of the patent: **14.05.2025**
(21) Application number: 22215585.5
(22) Date of filing: 21.12.2022
(51) Int. Cl.: G06N 3/045, G06N 3/0464, G06N 3/088, G06N 3/0895, G06N 3/09, G01H 9/00

(54) **METHOD FOR TRAINING A MACHINE LEARNING MODEL FOR OPTICAL FIBER SENSING MEASUREMENTS**
VERFAHREN ZUM TRAINIEREN EINES MACHINE LEARNING MODELLS FÜR MESSUNGEN DER OPTISCHEN FASERABNAHME
PROCEDE D'ENTRAINEMENT D'UN MODELE D'APPRENTISSAGE MACHINE POUR DES MESURES DE DETECTION PAR FIBRE OPTIQUE

(43) Date of publication of application: 26.06.2024
(73) Proprietor: Sensonic GmbH, 4780 Schärding (AT)
(72) Inventor: DEETLEFS, Richard Michael, 1050 Wien (AT)
(74) Representative: Mewburn Ellis LLP

(56) References cited:
- YANG YIYUAN ET AL: "Long-Distance Pipeline Safety Early Warning: A Distributed Optical Fiber Sensing Semi-Supervised Learning Method", IEEE SENSORS JOURNAL, IEEE, USA, vol. 21, no. 17, 8 June 2021 (2021-06-08), pages 19453 - 19461, XP011875694, ISSN: 1530-437X, [retrieved on 20210830], DOI: 10.1109/JSEN.2021.3087537
- MOALLEMI AMIRHOSSEIN ET AL: "Model-based vs. Data-driven Approaches for Anomaly Detection in Structural Health Monitoring: a Case Study", 2021 IEEE INTERNATIONAL INSTRUMENTATION AND MEASUREMENT TECHNOLOGY CONFERENCE (I2MTC), IEEE, 17 May 2021 (2021-05-17), pages 1 - 6, XP033935073, DOI: 10.1109/I2MTC50364.2021.9459999
- TEJEDOR TEJEDOR JAVIER JAVIER ET AL: "Toward Prevention of Pipeline Integrity Threats Using a Smart Fiber-Optic Surveillance System", JOURNAL OF LIGHTWAVE TECHNOLOGY 34: 4445-4453 (2016), 1 October 2016 (2016-10-01), pages 4445 - 4453, XP093039931, Retrieved from the Internet <URL:https://ieeexplore.ieee.org/stampPDF/getPDF.jsp?tp=&arnumber=7434581&ref=aHR0cHM6Ly9pZWVleHBsb3JlLmllZWUub3JnL2RvY3VtZW50Lzc0MzQ1ODE=> [retrieved on 20230418], DOI: 10.1109/JLT.2016.2542981
- TEJEDOR JAVIER ET AL: "A Contextual GMM-HMM Smart Fiber Optic Surveillance System for Pipeline Integrity Threat Detection", JOURNAL OF LIGHTWAVE TECHNOLOGY, IEEE, USA, vol. 37, no. 18, 15 September 2019 (2019-09-15), pages 4514 - 4522, XP011746148, ISSN: 0733-8724, [retrieved on 20190918], DOI: 10.1109/JLT.2019.2908816
- CAI XIAOPEI ET AL: "Design and application of real-time monitoring system for service status of continuously welded turnout on the high-speed railway bridge", JOURNAL OF TRANSPORTATION SAFETY & SECURITY, vol. 13, no. 7, 15 October 2019 (2019-10-15), pages 735 - 758, XP093034884, ISSN: 1943-9962, DOI: 10.1080/19439962.2019.1673858
- JAYAWICKREMA U M N ET AL: "Fibre-optic sensor and deep learning-based structural health monitoring systems for civil structures: A review", MEASUREMENT, INSTITUTE OF MEASUREMENT AND CONTROL. LONDON, GB, vol. 199, 25 June 2022 (2022-06-25), XP087139261, ISSN: 0263-2241, [retrieved on 20220625], DOI: 10.1016/J.MEASUREMENT.2022.111543
- CHADHA GAVNEET SINGH ET AL: "Deep Convolutional Clustering-Based Time Series Anomaly Detection", SENSORS, vol. 21, no. 16, 15 August 2021 (2021-08-15), pages 5488, XP093039943, DOI: 10.3390/s21165488
- HADI HOJJATI ET AL: "Self-Supervised Anomaly Detection: A Survey and Outlook", ARXIV.ORG, CORNELL UNIVERSITY LIBRARY, 201 OLIN LIBRARY CORNELL UNIVERSITY ITHACA, NY 14853, 10 May 2022 (2022-05-10), XP091224344
- BAROUDI UTHMAN ET AL: "Pipeline Leak Detection Systems and Data Fusion: A Survey", IEEE ACCESS, vol. 7, 12 July 2019 (2019-07-12), pages 97426 - 97439, XP011737237, DOI: 10.1109/ACCESS.2019.2928487
- KRAMER M A: "Nonlinear principal component analysis using autoassociative neural networks", AICHE JOURNAL, JOHN WILEY & SONS, INC, US, vol. 37, no. 2, 1 February 1991 (1991-02-01), pages 233 - 243, XP008081377, ISSN: 0001-1541, DOI: 10.1002/AIC.690370209

## Description

### Field of the Invention

The present invention relates to a method for training a machine learning model for use with data representative of optical fibre sensing measurements, such as distributed acoustic sensing measurements.

### Background

Optical fibre-based sensing systems typically use a laser source which launches a pulse of laser light into a length of optical fibre. Light from the pulse which is scattered within the fibre is then detected at an optical detector, so that the scattered light can be analysed to determine various properties of the optical fibre. In particular, properties such as strain and/or temperature at positions along the optical fibre can be determined from the received scattered light.

For example, Distributed Acoustic Sensing (DAS) enables an acoustic field (e.g. vibrations) in an environment of an optical fibre to be detected, with the optical fibre acting as a distributed transducer for the measurement. In more detail, the acoustic field may modulate strain along a length of the optical fibre, resulting in modulations of the length and refractive index along the fibre, which in turn affects scattering of the laser pulse along the optical fibre. Accordingly, the scattered light provides a measure of the acoustic field in the optical fibre's environment. To perform a DAS measurement, a laser pulse may be launched along the optical fibre, and then scattered (e.g. backscattered) signals are recorded as a function of time. The time of receipt of a scattered signal enables the position of a corresponding scattering site in the optical fibre to be determined (e.g. by comparing a time of receipt of the scattered signal with a time at which the laser pulse was launched into the fibre), such that strain at that scattering site can be estimated. In this manner, by looking at the scattered signals received over time, strain and hence the acoustic field can be monitored along an entire length of the fibre. Such an approach is known as an optical time domain reflectometer (OTDR) approach. In practice, optical fibres with lengths from 10 km to 50 km or more can be monitored with DAS and OTDR techniques.

Whilst DAS measurements rely on Rayleigh scattering of the laser pulse at scattering sites in the optical fibre, other scattering mechanisms may also be used for performing optical fibre sensing measurements. For example, Raman scattering of the laser light in the optical fibre can be measured to determine temperature along the length of the optical fibre, using Distributed Temperature Sensing (DTS) techniques. As another example, Brillouin scattering of the laser light in the optical fibre can be measured to determine strain and/or temperature, using Distributed Strain and Temperature Sensing (DSTS) techniques. An overview of known optical fibre sensing techniques is provided in the book "An Introduction to Distributed Optical Fibre Sensors" by A. H. Hartog (CRC Press, 2017).

In view of the ability provided by optical fibre sensing techniques to continuously monitor optical fibres over significant distances, these techniques find applications in a range of different fields. For instance, optical fibre sensing systems can be used for monitoring train tracks, e.g. where an optical fibre is laid along a length of the train tracks. Other possible applications include monitoring of pipelines, power lines, or road traffic, amongst others. Machine learning techniques and classification algorithms may be applied to measurement data collected by optical fibre sensing systems, in order to classify the data and/or enable event detection. As an example, where an optical fibre system is used for monitoring train tracks, data obtained from the optical fibre sensing system may be analysed to detect if a train derailment or a defect in the tracks occurs. As another example, where the optical fibre sensing system is used for monitoring a pipeline, data from the optical fibre sensing system may be analysed to detect if a leak occurs on the pipeline.

The article "Long-Distance Pipeline Safety Early Warning: A Distributed Optical Fiber Sensing Semi-Supervised Learning Method" by Yiyuan Yang et al. (IEEE Sensors Journal, vol. 21, no. 17, September 2021) discloses a pipeline safety early warning system based on distributed optical fibre sensors, where a semi-supervised learning model is used to monitor the safety of pipelines in real-time.

The present invention has been devised in light of the above considerations.

### Summary of the Invention

The inventors have found that a difficulty with applying machine learning techniques to optical fibre sensing data is that there may typically only be a relatively small number of ground truth data available for training a machine learning model. For instance, where an optical fibre sensing system is used to monitor train tracks, a user may wish to use a machine learning model for detecting when a train derailment or a defect in the tracks occurs based on received measurement data from the optical fibre sensing system. However, there may only be a relatively small amount of measurement data available corresponding to actual occurrences of train derailment or track defects for use in training the machine learning model. Moreover, differences between different train tracks, for example resulting from different site conditions (e.g. different soil conditions), different track structures, different trains and/or different fibre laying conditions, may mean that a model developed for one set of train tracks may not be applicable to another set of train tracks. As a result, machine learning models trained with conventional techniques for use with optical fibre sensing data may have a relatively low accuracy, due to the limited amount of ground truth data available for training.

Whilst there may only be a limited amount of ground truth data available for use in machine learning, optical fibre systems typically produce large volumes of measurement data, due to their use in continuous monitoring of large lengths of optical fibre. For example, some optical fibre sensing systems may routinely collect around 100 Megabytes of measurement data per second, although most of this collected data is currently unused for machine learning purposes.

The invention is based on the realisation that the large amounts of unlabelled data available from optical fibre sensing systems can be used in training of a machine learning model to improve accuracy of the machine learning model. At its most general, the invention provides a machine learning method where, in a first step, a first (general) machine learning model is trained using a first training dataset including unlabelled optical fibre sensing data. Then, in a second step, a transfer learning process is applied to adapt or fine-tune the first machine learning model to a more specific application (e.g. to perform a specific type of detection or classification). Due to the large volumes of optical fibre sensing data available, the first machine learning model may provide a general machine learning model which has a high level of generality and is highly adaptable. Thus, for example, once the first machine learning model is trained with an unlabelled training data set, it can be adapted using a relatively small volume of ground truth data to tailor the model to a specific task. The inventors have found that such a two-step training approach may yield a machine learning model which has higher accuracy, e.g. compared to machine learning methods which rely primarily on a restricted amount of ground truth data.

According to a first aspect of the invention, there is provided a method as set out in claim 1.

The machine learning model trained with the method of the invention is configured for use with data representative of an optical fibre sensing measurement. Herein, an optical fibre sensing measurement may correspond to any type of optical sensing measurement performed on an optical fibre. The optical fibre sensing measurement may be a distributed sensing measurement. Examples of optical fibre sensing measurements that can be used with the method of the invention comprise (but are not limited to) OTDR measurements, DAS measurements, DTS measurements, and/or DSTS measurements.

Herein, data representative of an optical fibre sensing measurement may refer to any type of data that may be obtained from an optical fibre sensing measurement. For example, the data may include information relating to detected signals (i.e. scattered signals from the fibre detected during the measurement), such as an amplitude of the signal, a time at which the signal is detected, a position of a scattering site in the optical fibre corresponding to the detected signal, a frequency of the signal, a phase of the signal, and/or a polarisation of the signal. The data may additionally or alternatively comprise information about the optical fibre derived from the detected signals, such as strain and/or temperature within the optical fibre, e.g. as a function of time and/or position along the optical fibre.

The first machine learning model is trained using a first training dataset which is unlabelled. In other words, the first training dataset does not comprise any labels which are used for training the first machine learning model. Thus, the data representative of optical fibre sensing measurements in the first training dataset may not include any labels categorising or classifying the data for training purposes. In this manner, the first training dataset can be established by collecting data from one or more optical fibre sensing measurement systems, without a user having to label the data. This may enable the large volumes of data which are available from optical fibre sensing measurement systems to be used, as no time-intensive labelling process is required for constructing the first training dataset.

The data in the first training dataset may correspond to (raw) data obtained directly from the one or more optical fibre measurement systems. In some cases, data received from the one or more optical fibre measurement systems may undergo a data preparation step (e.g. a pre-processing step) before being entered into the first training dataset, e.g. to put the data into a suitable format for the training process.

Thus, the method may further comprise a step of receiving, from one or more optical fibre sensing systems, data representative of optical fibre sensing measurements, and including the received data in the first training dataset.

The first machine learning model may be trained using any suitable machine learning technique which takes unlabelled data as an input. For example, as discussed in more detail below, the first machine learning model may be trained using self-supervised and/or unsupervised machine learning techniques. The first machine learning model may be any suitable type of machine learning model, such as an artificial neural network (ANN), e.g. a convolutional neural network (CNN) and/or a transformer network.

The second machine learning model is then trained using the second training dataset. The second machine learning model incorporates at least part of the trained first machine learning model. Thus, training of the second machine learning model may be performed after training of the first machine learning model is completed.

The second machine learning model incorporating at least part of the trained first machine learning model may mean that part or all of the first machine learning model is included in the second machine learning model. For example, one or more layers of the trained first machine model may be included in the second machine learning model. Thus, features of the first machine learning model which were learned with the first training dataset are included in the second machine learning model, which is then trained using the second training dataset.

The at least part of the first machine learning model may be incorporated into the second machine learning model in various ways. For example, in some cases, the second machine learning model may comprise one or more (possibly all) layers of the first machine learning model, to which one or more further layers are added. The one or more further layers may then take as input an output from the one or more layers of the first machine learning model. Alternatively, all or part of the first machine learning model may be used as the second machine learning model, with training of the second machine learning model resulting in parameters of the first machine learning model being adjusted.

The second training dataset comprises data representative of optical fibre sensing measurements, and is smaller than, or equal in size to, the first training dataset. In other words, a number of data elements in the second training dataset may be smaller or equal to a number of data elements in the first training dataset.

The second training dataset may be different from the first training dataset. For example, the second training dataset may correspond to a different set of optical fibre sensing measurements compared to the first training dataset. In some cases, the second training dataset may correspond to a subset of the data in the first training dataset. Alternatively, in some cases, the second training dataset may comprise the same data as the first training dataset.

The second training dataset may be adapted to a task which is to be performed by the second machine learning model. Thus, whereas the first training dataset is unlabelled and not tailored to any specific task, the second training dataset may be adapted to train the second machine learning model to perform a specific task. As an example, the second training dataset may comprise ground truth data (e.g. labelled data) which is used for training the second machine learning model. For instance, where it is desired to train the second machine learning model as a classifier, the second training dataset may comprise labelled data for classifier training. Various examples of types of second training dataset are provided below.

Data in the first training dataset and the second dataset may be obtained from one or more optical fibre sensing systems. Data in the first training dataset and the second dataset may be obtained from the same and/or different optical fibre sensing systems. The optical fibre sensing system(s) used for collecting data in the first and second training datasets may comprise any suitable type of optical fibre sensing system, e.g. capable of performing the optical fibre sensing measurements mentioned above. Additionally or alternatively, the first training dataset and/or the second training dataset may comprise simulated (e.g. computer-generated) optical fibre sensing data.

Each of the one or more optical fibre sensing systems may be arranged to perform a same type of optical fibre sensing measurement. In other words, data in the first training dataset and data in the second training dataset may be representative of a same type of optical fibre sensing measurement.

Each of the one or more optical fibre sensing systems may be arranged to monitor (observe) a same type of system or environment. Examples of types of systems or environments that may be monitored with an optical fibre sensing system include (but are not limited to) train (railway) tracks, a pipeline, a road, a fence, a boundary (or perimeter), a power transmission line, and an underwater infrastructure. So, for example, where multiple optical fibre sensing systems are used for collecting data in the first and/or second training datasets, each of the optical fibre sensing systems may be arranged to monitor a (respective) set of train tracks (or any other suitable type of system or environment).

Training of the second machine learning model may be performed using any suitable machine learning technique. For example, as discussed in more detail below, the second machine learning model may be trained using supervised and/or unsupervised machine learning techniques. The type of training used for the second machine learning model may be selected in accordance with a task to be performed by the second machine learning model (e.g. event detection, event prediction, data classification, anomaly detection, etc.).

The second machine learning model is configured to generate an output based on received data that is representative of an optical fibre sensing measurement. Thus, following training of the second machine learning model, the second machine learning model can receive new (e.g. previously unseen) optical fibre sensing data as an input, and generate an output in response. The type of output generated by the second machine learning model may depend on the type of model and training used.

By way of example, the second machine learning model may be trained for event detection, in which case the second machine learning model may be configured output an indication of whether an event is detected based on the received data. As another example, the second machine learning model may be trained as a classifier, in which case the second machine learning model may be configured to output information indicative of a classification based on the received data. As a further example, the second machine learning model may be trained as an anomaly detector, in which case the second machine learning model may be configured to output an indication of whether an anomaly is detected based on the received data.

As yet a further example, the second machine learning model may be configured to predict a property or variable of a system that is being monitored with the optical fibre system. For instance, where the optical fibre sensing data is received from an optical fibre sensing system arranged to monitor a set of train tracks, the machine learning model may be configured to predict a position and/or a velocity of a train on the train tracks, based on the received data.

The second machine learning model is configured to generate an output based on received data obtained from a first optical fibre sensing system, where the second training dataset includes data obtained from the first optical fibre sensing system. In this manner, the second machine learning model may be specifically trained for use with data from the first optical fibre sensing system.

In line with the discussion above, training of the first machine learning model using the unlabelled first training dataset enables large volumes of optical fibre sensing data to be used for training the first machine learning model. As a result, the first machine learning model may provide a generic (generalised) model of the optical fibre sensing data. For example, as a result of training with the first training dataset, the first machine learning model may have learned feature mappings in latent space for the optical fibre sensing data. The step of training the second machine learning model may then act as a transfer learning step, where parts of the trained first machine learning model are reused and in the context of a more specific task.

Advantageously, by reusing at least part of the first machine learning model in the second machine learning model, effective training of the second machine learning model can still be achieved even with a relatively small second training dataset. This is because the second machine learning model includes features of the generic first machine learning model trained using the potentially very large first training dataset, such that insights into the optical fibre sensing data gained by the first machine learning model can contribute to improving an accuracy of the second machine learning model. Accordingly, the invention may enable effective training of a machine learning model for use with optical fibre sensing data, even in situations where there is scarce ground truth data available.

A further benefit of the two-step training process of the invention is that the generic first machine learning model obtained via training with the first training dataset can be used for solving a variety of different problems, by adapting the second training dataset used for training the second machine learning model. For example, once the first machine learning model is trained, it can be used in various different second machine learning models, which may be adapted for performing different specific tasks. In other words, multiple different second machine learning models can reuse the same first machine learning model, such that the first machine learning model may only need to be trained once. Thus, once the first machine learning model is trained, the computational cost of developing multiple different second machine learning models may be relatively low.

The method may comprise performing a first machine learning process for training the first machine learning model, and a second machine learning process for training the second machine learning model, where the second machine learning process is different from the first machine learning process. In other words, different machine learning processes may be applied for training the first and second machine learning models. This may enable the first machine learning model to be trained as a generic model for the optical fibre sensing data, whilst training the second machine learning model for a specific task. The first machine learning process and the second machine learning process may, for example, rely on different training (learning) algorithms. The first and second machine learning processes may correspond to different types (or techniques) of machine learning.

The second machine learning model may be trained using a supervised learning process, and the second training dataset may comprise labelled data used in the supervised learning process. In this manner, the second machine learning model can be trained for a specific task via supervised learning with the labelled data in the second training dataset. Labelling of the data in the second dataset may be adapted to a type of task for which the second machine learning model is trained. For example, supervised learning may be used to train the second machine learning model as a classifier, as an event detection model, as an event prediction model, as an anomaly detector, and/or as a model for predicting a property or variable of a system that is being monitored with the optical fibre system. Any suitable type of supervised machine learning technique may be used for training the second machine learning model.

Where supervised learning is used to train the second machine learning model, the second training dataset may be smaller (e.g. have fewer data elements) than the first training dataset. The labelled data in the second training dataset may be referred to as ground truth data. Advantageously, only a relatively small amount of labelled data elements may be required for training the second machine learning model, due to the larger first training dataset used for training the first machine learning model.

The labelled data may comprise data elements that are labelled to indicate an attribute of the data elements; and the output generated by the second machine learning model may be indicative of an attribute of the received data. In this manner, the second machine learning model may learn based on the labelled data to recognise an attribute in optical fibre sensing data, so that it can then determine or predict a corresponding attribute in new (e.g. previously unseen) optical fibre sensing data.

The attribute may correspond to a predetermined condition. Thus, each data element may be labelled to indicate if the data element corresponds to the predetermined condition (e.g. if the predetermined condition took place when the data elements were recorded). Then, the output generated by the second machine learning model may be indicative of a probability that the received data corresponds to the predetermined condition. In other words, the second machine learning model may learn to recognise and/or predict the predetermined condition from received optical fibre sensing data. The predetermined condition, may correspond to any condition or event along the optical fibre (or along a system monitored by the optical fibre) which a user may wish to detect or predict. For instance, in the example given above where the optical fibre sensing system is used to monitor train tracks, the predetermined condition may correspond to a train derailment, occurrence of a defect in the train tracks, or a person or animal crossing the train tracks.

Alternatively, the attribute may correspond to a value of a predetermined parameter of the optical fibre sensing system and/or a system monitored by the optical fibre sensing system. For example, each data element may be labelled with a value of the predetermined parameter. In this manner, the second machine learning model can be trained to predict a value of the predetermined parameter based on received optical fibre sensing data. For instance, in the example given above where the optical fibre sensing system is used to monitor train tracks, the attribute may correspond to a value of a velocity and/or position of a train traveling along the train tracks.

The second machine learning model may be trained using an unsupervised learning process, and the second training dataset may comprise unlabelled data used in the unsupervised learning process. This may enable the second machine learning model to be trained to perform a variety of tasks, without requiring labelled data. For instance, the second machine learning model may be trained as a clustering algorithm, using any suitable clustering technique. An example application where the second machine learning model could be configured as a clustering algorithm is where the second training dataset includes unlabelled data from a track infrastructure having a double track line. Then, the second machine learning model could be trained to cluster the data into two separate clusters, e.g. one cluster per track.

In some cases, both supervised and unsupervised process may be combined for training the second machine learning model. In such a case, the second training dataset may comprise labelled data elements (used in the supervised learning) and unlabelled data elements (used in the unsupervised learning).

The second machine learning model may be configured as an anomaly detector. This may, for example, enable the second machine learning model to detect when a system monitored by the optical fibre sensing system is not performing as expected. The anomaly detector may be trained using supervised learning with labelled data elements in the second training dataset. For example, the data elements may be labelled to indicate if they correspond to a normal behaviour of the system, or if they correspond to an anomalous (irregular) behaviour of the system. Alternatively, the anomaly detector may be trained using unsupervised training with unlabelled data elements in the second training dataset, e.g. the anomaly detector may be trained to determine what constitutes normal and anomalous behaviour of the system.

The first training dataset may be collected using two or more different optical fibre sensing systems. In other words, the data in the first training dataset may be obtained from multiple different physical optical fibre sensing systems. This may serve to increase a level of generality of the first machine learning model, as data in the first training dataset is not limited to a single physical optical fibre sensing system. This may make the first machine learning model more flexible and adaptable, in turn facilitating its use in a wider range of contexts. In particular, this may enable a single generic first machine learning model to be trained using data from multiple different systems, which can then be used to solve problems with input data obtained from different physical optical fibre sensing systems. For instance, there may be variations across different optical fibre sensing systems which may impact the data generated by the different optical fibre sensing systems. Thus, including data from multiple optical fibre sensing systems in the first training dataset may enable the first machine learning model to learn and take into account differences between different optical fibre sensing systems. As an example, this may facilitate incorporating the same first machine learning model into multiple different second machine learning models, each of the multiple different machine learning models being configured for use with data received from different respective optical fibre sensing systems. More generally, increasing the number of optical fibre sensing systems which contribute to the first training dataset may increase a level of generality of the first machine learning model, which in turn enhances its flexibility and adaptability.

Herein, an optical fibre sensing system may also be referred to as a measurement system.

The two or more different optical fibre sensing systems may be located at different geographical sites. This may serve to further improve the level of generality of the first machine learning model, which may enable it to cope with data received from a wider variety of optical fibre sensing systems. By including data obtained from different geographical sites in the first training dataset, variations across the different geographical sites may be learned and taken into account by the first machine learning model. This may facilitate using the same first machine learning model in the context of data received from systems located at different geographical sites around the world. In particular, the inventors have found that with many applications there may be variations in data obtained from optical fibre sensing systems located at different geographical sites, which may be due to differences in local conditions. For example, where the optical fibre sensing systems are used to monitor train tracks at different geographical sites, differences in soil conditions, optical fibre laying conditions, trains used on the tracks and other factors may contribute to variations in optical fibre sensing data obtained at the different geographical sites.

The second training dataset may be collected using fewer optical fibre sensing systems than the first training dataset. In this manner, the first machine learning model may be trained to have a greater level of generality, whilst training of the second machine learning model may be more specific to particular optical fibre sensing systems of interest. This may contribute to improving an accuracy of the second machine learning model, which may benefit from features of the first machine learning model learned based on the larger number of optical fibre sensing systems. Moreover, in line with the discussion above, use of data from a larger number of optical fibre sensing systems for training the first machine learning model may enable effective training even when there is scarce training data available to the particular optical fibre sensing systems of interest. In other words, features learned by the first machine learning model from the larger number of optical fibre sensing systems can be applied by the second machine learning model in the context of the particular optical fibre sensing systems of interest.

Where the first training dataset was collected using two or more optical fibre sensing systems located at different geographical sites, the second training dataset may be collected using optical fibre sensing systems located at a smaller number of geographical sites.

The data in the first training dataset may be obtained from a first set of optical fibre sensing systems, and the data in the second training dataset may be obtained from a second set of optical fibre sensing systems, the first set being larger than the second set. The first set of optical fibre sensing systems may include one or more of the optical fibre sensing systems in the second set. In other words, the first and second training datasets may comprise data from one or more same optical fibre sensing systems. Alternatively, the first set of optical fibre sensing systems may not include any of the optical fibre sensing systems from the first set, i.e. the first and second training datasets may be obtained from completely different sets of optical fibre sensing systems.

In alternative scenarios, data from the same number of optical fibre sensing systems may be used in the first and second training datasets, e.g. the same optical fibre sensing systems may be used for both the first and second training datasets. This may be the case, for example, where the first and second training datasets have the same size.

The second machine learning model may comprise the trained first machine learning model and a decision model which is connected to an output of the first machine learning model. In other words, the decision model may be added on to the trained first machine learning model, to form the second machine learning model. Such a structure may facilitate adapting the first machine learning model to a desired task, as a suitable decision model can be added to the first machine learning model without having to otherwise modify the first machine learning model. This may therefore provide a flexible and adaptable approach for training the second machine learning model. The decision model may be arranged to receive (as its input) one or more outputs from the first machine learning model (e.g. from one or more layers of the first machine learning model), and to generate an output based on the received one or more inputs. For example, the first machine learning model may be configured to map input optical fibre sensing data to an output in latent space. The decision model may then be configured to receive the output in latent space, and to map output in latent space to a desired output (e.g. a classification, event detection, event prediction, anomaly detection, etc.).

The decision model may be any suitable type of machine learning model. Examples of suitable types of machine learning model include an artificial neural network (ANN), a convolutional neural network (CNN), a recurrent neural network (RNN) or a transformer network. Other types of machine learning models such as a support vector machine (SVM), a logistic regression model, or a k-means clustering model could also be used.

Once the decision model has been connected to the output of the trained first machine learning model to form the second machine learning model, the second machine learning model may be trained using the second training dataset, in line with the discussion above. Training the second machine learning model in this case may involve adjusting parameters of the first machine learning model and/or of the decision model based on the second training dataset.

The second machine learning model may comprise the trained first machine learning model and two or more decision models, each of the two or more decision models being connected to an output of the first machine learning model; and each of the two or more decision models may be trained using a respective second training dataset. In other words, the trained first machine learning model may be combined with two or more decision models, each of which can be trained using a respective training dataset. Each decision model may be configured to perform a respective task, i.e. each decision model may be configured to generate a respective output (e.g. classification, event detection, event prediction, anomaly detection, etc.) in response to receiving an input from the first machine learning model. Such a structure may take advantage of the first machine learning model's level of generality, enabling a wide variety of tasks to be performed with different decision models connected to the same first machine learning model. Additionally, as the same first machine learning model is used with multiple decision models, the first machine learning model may need to only be trained once, thus reducing an amount of time and computing resources required for training (e.g. in contrast to a scenario where completely separate models are trained for each task). This may also avoid having to duplicate the first machine learning model to perform different tasks, as a single instance of the first machine learning model can provide outputs to the multiple different decision models.

The first machine learning model may comprise a plurality of outputs (e.g. from a plurality of layers in the first machine learning model). Each of the two or more decision models may be connected to one or more of the plurality of outputs from the first machine learning model. In some cases, the two or more decision models may be connected to different (respective) inputs from the first machine learning model. In other cases, the two or more decision models may be connected to a same output from the first machine learning model.

The respective second training dataset used for each of the two or more decision models may be adapted to a task that is to be performed by that decision model. Any suitable training process may be performed for training each of the two or more decision models. Each of the two or more decision models may be trained independently, i.e. so that training of a given decision model with its respective second training dataset does not affect parameters (features) in any of the other two or more decision models.

Each of the two or more decision models may be as described above, e.g. in the form of suitable type of machine learning model, such as an artificial neural network (ANN), a convolutional neural network (CNN), a recurrent neural network (RNN) and/or a transformer network. Other types of machine learning models such as a support vector machine (SVM), a logistic regression model, or a k-means clustering model could also be used.

The trained first machine learning model may remain fixed during training of the second machine learning model. In other words, parameters (e.g. features, coefficients) of the first machine learning model may remain fixed (unchanged) during training of the second machine learning model. For example, only parameters in a decision model connected to the first machine learning model may be adjusted during training of the second machine learning model, whilst parameters in the first machine learning model remain fixed. This may simplify training of the second machine learning model, by avoiding retraining of the first machine learning model which may typically be larger and more complex than any decision model connected to the first machine learning model. This may also facilitate reusing the first machine learning model once it has been trained, as the level of generality of the first machine learning model may be maintained even after training of the second machine learning model.

Alternatively, one or more parameters of the trained first machine learning model may be adjusted during training of the second machine learning model. In this manner, parameters (e.g. features, coefficients, weights, and/or bias) of the first machine learning model may be adapted based on the second training dataset. This may enable the relatively generic first machine learning model to be specifically adapted to a particular task using the second training dataset. This may contribute to improve an accuracy of the second machine learning model. In such a case where parameters of the first machine learning model are adjusted, the second machine learning model may consist of at least part of the first machine learning model, which is adjusted as part of the training with the second training dataset. Otherwise, similarly to the examples above, the second machine learning model may include the first machine learning model connected to a decision model, where parameters of both the first machine learning model and the decision model are adjusted during training with the second training dataset.

The first machine learning model may be trained with the first training dataset via a self-supervised learning process. Self-supervised learning may enable effective training of the first machine learning model using the unlabelled first training dataset, and may provide the first machine learning model with a detailed understanding of the data.

The self-supervised learning process may comprise partially masking data in the first training dataset, and training the first machine learning model to reconstruct data in the first training dataset from the partially masked data. The inventors have found that such a technique may provide for effective and reliable training of the first machine learning model. In particular, by training the first machine learning model to reconstruct partially masked data, the first machine learning model may effectively learn to recognise and predict features of optical fibre sensing data. Thus, the first machine learning model may comprise an autoencoder (or masked autoencoder).

The partial masking of the data in the first training dataset may, for example, involve applying one or more randomly generated masks to the data. The self-supervised learning process may be an iterative process where the machine learning model is iteratively adjusted to reduce (minimise) a difference between data reconstructed by the first machine learning model and corresponding data in the first training dataset. For example, each iteration may involve randomly generating one or more masks, applying the one or more masks to the data in the first training dataset, reconstructing with the first machine learning model data masked by the one or more masks, and comparing the reconstructed data with the corresponding original (unmasked) data in the first training dataset.

The first training dataset may further comprise data indicative of environmental conditions associated with recording (collecting) of data in the first training dataset, and/or the second training dataset may further comprise data indicative of environmental conditions associated with recording (collecting) of data in the second training dataset. The use of data indicative of environmental conditions in the first training dataset may enable the first machine learning model to relate features in the optical fibre sensing data with environmental conditions, which may improve an accuracy of the of the first machine learning model. Similarly, the use of data indicative of environmental conditions in the second training dataset may enable the second machine learning model to relate features in the optical fibre sensing data with environmental conditions, which may improve an accuracy of the second machine learning model. As an example, each entry of optical fibre sensing data in the first training dataset and/or the second training dataset may be associated with respective environmental data, which is indicative of environmental conditions at a time and location corresponding to recording of the optical fibre sensing data.

The data indicative of environmental conditions may relate to any type of environmental condition. Examples of types of environmental conditions include weather conditions (e.g. temperature, cloud coverage, humidity, wind speed, etc.), date, time of day, geographical location, etc. The data indicative of environmental conditions may be obtained using any suitable sensors, which may be separate from the optical fibre sensing systems used for obtaining the optical fibre sensing data.

Where data indicative of environmental conditions is used for training the first machine learning model and/or the second machine learning model, the second machine learning model may be configured to generate an output based on received data that is representative of an optical fibre measurement and data that is representative of environmental conditions associated with the optical fibre sensing measurement. In this manner, the second machine learning model may take into account the environmental conditions, which may improve an accuracy of the output of the second machine learning model.

According to a second aspect of the invention, there is provided a method as set out in claim 13.

The method of the second aspect of the invention corresponds to use of a machine learning model which was trained according to a method of the first aspect of the invention. Accordingly, any features described above in relation to the first aspect may be shared with the second aspect.

In line with the discussion above in relation to the first aspect, the output may comprise one or more of a classification, event detection, event prediction, anomaly detection, etc.

In some cases, the output generated by the machine learning model may be indicative of a probability that the received data corresponds to a predetermined condition, and/or the output generated by the machine learning model may be indicative of an attribute of the data.

According to a third aspect of the invention, there is provided a computer-implemented system as set out in claim 15.

The system of the third aspect of the invention may be used for performing the method of the first aspect of the invention. Thus, any of the features described above in relation to the first aspect may be shared with the third aspect.

The computer-implemented system may comprise any suitable computing device or network of computing devices which is configured to perform the recited steps. The computer-implemented system may comprise a storage medium storing executable instructions thereon, and a processing system configured to executed the instructions, wherein execution of the instructions causes the processing system to perform the recited steps (i.e. the steps of the method of the first aspect).

In a more general aspect, the invention may provide a computer storage medium, storing executable instructions, wherein, when the instructions are executed by a processing system, the instructions are arranged to cause the processing system to perform the steps of the method of the first aspect.

According to a fourth aspect of the invention, there is provided a computer-implemented system as set out in claim 16.

The computer-implemented system of the fourth aspect of the invention may be used to perform the method of the second aspect of the invention. Accordingly, any features described above in relation to the first aspect and/or the second aspect may be shared with the fourth aspect of the invention.

The computer-implemented system of the fourth aspect may comprise a storage medium in which the machine learning model is stored. The storage medium may be implemented using one or more (e.g. an array) of physical storage devices.

The invention includes the combination of the aspects and preferred features described except where such a combination is clearly impermissible or expressly avoided.

### Summary of the Figures

Embodiments illustrating the principles of the invention will now be discussed with reference to the accompanying figures in which:
Fig. 1 is a diagram illustrating a method according to an embodiment of the invention;
Fig. 2a is a schematic diagram of a system according to an embodiment of the invention;
Fig. 2b is a schematic diagram of a system according to an embodiment of the invention;
Fig. 3a is a schematic diagram of an optical fibre system that may be used with a system of the invention;
Fig. 3b shows an example of data that may be obtained with the system of Fig. 3a;
Fig. 3c shows another example of data that may be obtained with the system of Fig. 3a;
Fig. 4a is a diagram illustrating an example process for training a first machine learning model in an embodiment of the invention;
Fig. 4b shows examples of data corresponding to different steps in the method of Fig. 4a;
Fig. 5 is a diagram illustrating an example process for training a second machine learning model in an embodiment of the invention; and
Fig. 6 is a diagram illustrating an example process for training a second machine learning model in an embodiment of the invention.

### Detailed Description of the Invention

Aspects and embodiments of the present invention will now be discussed with reference to the accompanying figures. Further aspects and embodiments will be apparent to those skilled in the art.

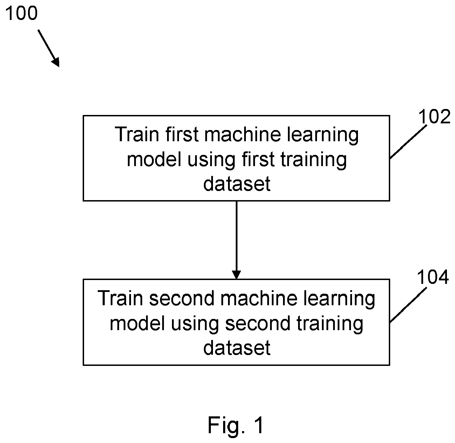

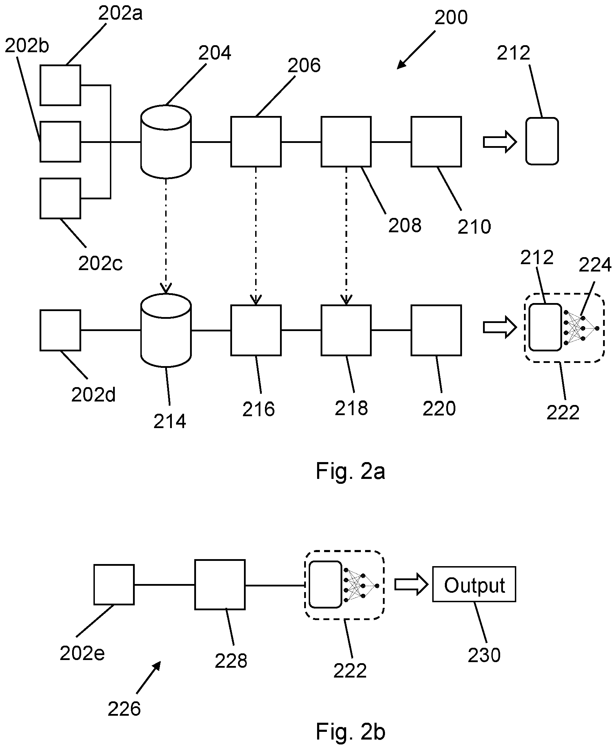

Fig. 1 illustrates a method 100 for training a machine learning model according to an embodiment of the invention, whilst Fig. 2a shows a schematic diagram of a system 200 which can be used for implementing the method 100. For illustration purposes, the method 100 will be described in the context of the system 200, although the method 100 is not limited to being implemented with the system 200.

In a first step 102, the method 100 involves training a first machine learning model using a first training dataset, where the first training dataset comprises data representative of optical fibre sensing measurements, and where the first training dataset is unlabelled. Turning to Fig. 2a, the optical fibre sensing data in the first training dataset may be obtained using one or more optical fibre sensing systems 202a-c. In the example shown, optical fibre sensing data is collected from three separate optical fibre sensing systems 202a-c, however other embodiments may use data from different numbers of systems. Each of the optical fibre sensing systems 202a-c is configured to perform a same type of optical fibre sensing measurement, e.g. such as DAS, DTS or DSTS. Additionally, each of the optical fibre sensing systems 202a-c is arranged to a same type of system or environment. In this manner, the optical fibre sensing data collected from the systems 202a-c may correspond to a same type of data. For example, each of the optical fibre sensing systems 202a-c may be arranged to monitor a respective set of train tracks, i.e. each optical fibre sensing system 202a-c may comprise an optical fibre which extends along a length of the respective tracks. Of course, the invention is not limited to monitoring of train tracks, and other types of systems or environments that can be monitored with the systems 202a-c include pipelines, roads, fences, boundaries (or perimeters), a power transmission lines, and underwater infrastructures. Accordingly, each of the optical fibre sensing systems 202a-c may be located at different geographical sites, i.e. corresponding to the respective systems or environments monitored by the optical fibre sensing systems 202a-c.

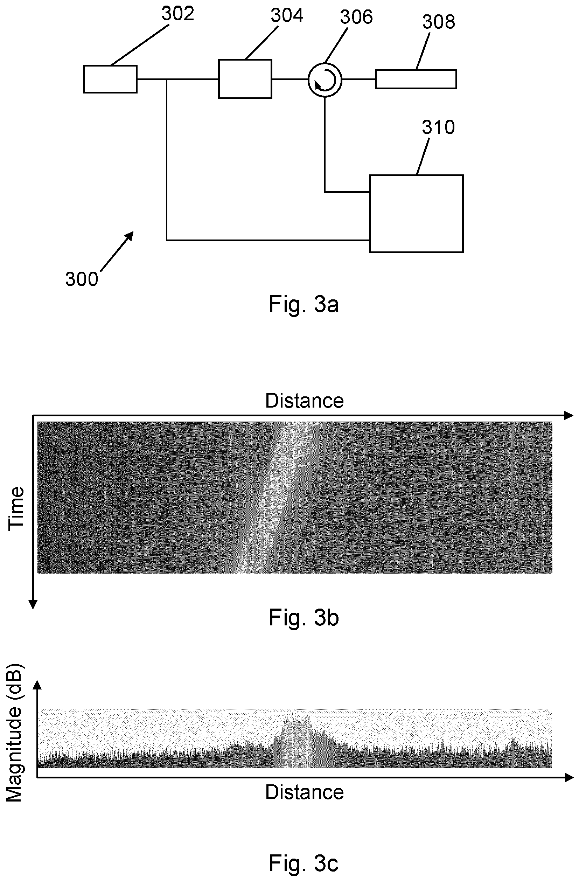

The optical fibre sensing data received from the optical fibre sensing systems 202a-c may correspond to raw measurement data, and may take various forms depending on the specific type of measurement performed with the systems 202a-c. For example, the data received from each system 202a-c contain information relating to a signal detected by that system, such as an amplitude of the signal, a time at which the signal is detected, a position of a scattering site in the optical fibre corresponding to the detected signal, a frequency of the signal, a phase of the signal, and/or a polarisation of the signal. The data may additionally or alternatively comprise information about the optical fibre derived from the detected signals, such as strain and/or temperature within the optical fibre, e.g. as a function of time and/or position along the optical fibre. An example of an optical fibre sensing system and optical fibre sensing data is described in more detail below in relation to Figs. 3a and 3b. The system 200 may be configured to store data received from the optical fibre sensing systems 202a-c in a first database 204. The first database 204 may be implemented using any suitable storage system.

The raw optical fibre sensing data in the first database 204 may then be provided to a first data preparation (e.g. pre-processing) module 206, which is configured to prepare the optical fibre sensing data for use in training the first machine learning model. This may comprise a variety of different steps, depending on the specific training process and machine learning model to be used. In some cases, the first data preparation module 206 may be configured to sample the raw optical fibre sensing data from the optical fibre sensing systems 202a-c, e.g. at a predetermined sampling rate, to reduce an amount of processing power required to process the data. The first data preparation module 206 may also be configured to convert the raw data in the first database 204 into a predetermined format (or representation), where the predetermined format is adapted to an input of the first machine learning model. Other types of pre-processing such as noise reduction and/or smoothing algorithms may also be applied to the raw data. The prepared data output by the first data preparation module 206 may be stored in a first training database 208. In other words, the first training database 208 may store data prepared by the first data preparation module 206 based on the raw data received from the optical fibre sensing systems 202a-c. The data stored in the first training database 208 may be considered as the first training dataset. The first training dataset may thus comprise a plurality of data elements derived from the raw data obtained from the optical fibre sensing systems 202a-c, the plurality of data elements being representative of the optical fibre sensing measurements performed by the systems 202a-c. The first training dataset is unlabelled, such that no ground truth labelling of the data in the first training dataset need be performed.

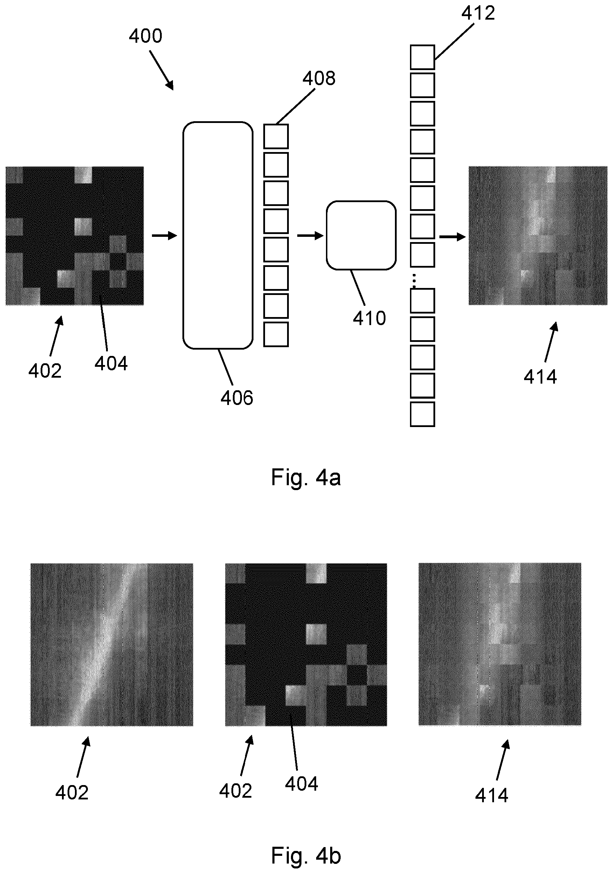

The system 200 further comprises a first training module 210 which is configured to train the first machine learning model 212 using the unlabelled first training dataset from the first training database 208. The first machine learning model 212 may be any suitable type of machine learning model, e.g. an artificial neural network (ANN) such as a convolutional neural network (CNN) or transformer network. The first training module 210 may be configured to train the first machine learning model 212 using any suitable machine learning process which can take the unlabelled first dataset from the first training database 208 as an input. For instance, the training process performed by the first training module 210 may involve a self-supervised or unsupervised learning technique. An example of a self-supervised learning technique that can be used for training the first machine learning model is described below in relation to Fig. 4.

The trained first machine learning model 212 resulting from the training process performed by the first training module 210 (i.e. resulting from the step 102 of the method 100) may be considered as a generic model which may have a relatively high level of generality, due to the use of optical fibre sensing data from several different optical fibre sensing systems 202a-c which may be located at multiple different geographical sites (locations). Moreover, as no labelling of the optical fibre sensing data is required for the training of the first machine learning model 212, the first training dataset may comprise a relatively large volume of data, which may serve to enhance the level of generality of the model. The level of generality of the first machine learning model may be increased by increasing the amount of data included in first training dataset, e.g. by using data collected over longer periods of time and/or by using data collected from a larger number of optical fibre sensing systems.

Returning to Fig. 1, in a second step 104 of the method 100, a second machine learning model is trained. The second machine learning model incorporates the trained first machine learning model, i.e. the first machine learning model trained in step 102 (e.g. the first machine learning model 212 trained by the first training module 210). A second training dataset is used for training the second machine learning model. The second training dataset may be labelled or unlabelled, depending on the type of training to be performed. In the example shown in Fig. 2a, the second training dataset is obtained using an optical fibre sensing system 202d. The optical fibre sensing system 202d is configured to perform a same type of measurement as the optical fibre sensing systems 202a-c, and arranged to monitor a same type of system or environment as the systems 202a-c. In some cases, the optical fibre sensing system 202d may correspond to one of the systems 202a-c which is used for the first training dataset, i.e. a same optical fibre sensing system may contribute to both the first and second training datasets. Alternatively, the optical fibre sensing system 202d used for the second training dataset may not be included in the optical fibre sensing systems 202a-c used for the first training dataset. Whilst Fig. 2a shows a single optical fibre sensing system 202d which is used for collecting the second training dataset, other embodiments may use different numbers of systems for collecting the second training dataset. The number of systems used for collecting the second training dataset may typically be smaller than the number of systems used for collecting the first training dataset, although in some cases the same number of systems may be used for both training datasets.

The optical fibre sensing data received from the optical fibre system 202d may correspond to raw measurement data, and may have a same form as the data received from the systems 202a-c described above. The system 200 may be configured to store the data received from the optical fibre sensing system 202d in a second database 214, which may have a similar configuration to the first database 204 mentioned above. A second data preparation module 216 is then configured to prepare the optical fibre sensing data from the optical fibre sensing system 202d for use in training the second machine learning model. The second data preparation module 216 may perform steps analogous to those performed by the first data preparation module 206 described above. In particular, the second data preparation module 216 may put the raw data received from the optical fibre sensing system 202d into a format which is adapted to an input of the second machine learning model. In some cases, the same data format may be used for both the first and second machine learning models, such that the same data preparation steps may be performed by the first and second data preparation modules 206, 216. The prepared data output by the second data preparation module 216 may be stored in a second training database 218. In other words, the second training database 218 may store data prepared by the second data preparation module 216 based on the raw data received from the optical fibre sensing system 202d. The data stored in the second training database 218 may be considered as the second training dataset. The second training dataset may thus comprise a plurality of data elements derived from the raw data obtained from the optical fibre sensing system 202d, the plurality of data elements being representative of the optical fibre sensing measurements performed by the system 202d.

In some cases, the second training dataset may be labelled. For example, a labelling step may be performed as part of the data preparation steps carried out by the second data preparation module 216. The second data preparation module 216 or another part of the system 200 may provide a user interface, arranged to enable a user to label data elements in the second training dataset. The second training database 218 may then store the second training dataset, and a set of labels associated with data elements in the second training dataset. Each label may be indicative of an attribute and/or a predetermined condition corresponding to its associated data element. As an example, a data element may be labelled to indicate that a predetermined condition or event occurred in the system or environment monitored by the corresponding optical fibre sensing system when the corresponding measurement was performed. As another example, a data element may be labelled to indicate a property of the system or environment monitored by the corresponding optical fibre sensing system when the corresponding measurement was performed.

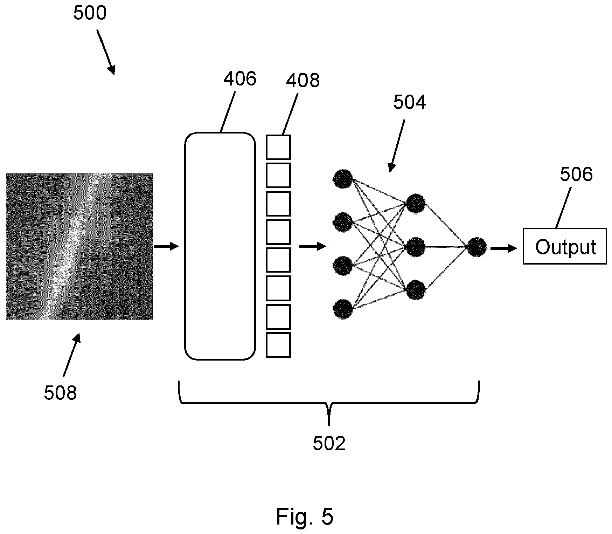

The system 200 further comprises a second training module 220 which is configured to train the second machine learning model 222. The second machine learning model 222 incorporates at least part of the first machine learning model 212. For example, as shown in Fig. 2a, the second machine learning model 222 may comprise a decision model 224 which is connected to an output of the first machine learning model 212. The decision model 224 may be any suitable type of machine learning model, e.g. an ANN , CNN, RNN and/or transformer network. The decision model 224 may also be an SVM, a logistic regression model, or a k-means clustering model. The second training module 220 may be configured to train the second machine learning model 222 using any suitable machine learning process. Where the second training dataset comprises labelled data elements, the second training module 220 may employ a supervised learning technique for training the second machine learning model 222. In particular, the second machine learning module 220 may treat the labelled data elements as ground truth data for supervised learning of the second machine learning model 222. An example of a second machine learning model which may be trained via the second training module 220 is described below in relation to Fig. 5.

In the example of Fig. 2a, treatment of the data received from the optical fibre sensing system 202d illustrated separately from to the data received from the optical fibre sensing systems 202a-c. However, this need not necessarily be the case in practise. For example, where a first optical fibre sensing system (e.g. system 202a) contributes to both the first and second training datasets, data from the optical fibre sensing system 202a may only need to be stored and prepared once. In other words, data elements prepared by the first preparation module 206 based on measurement data received from the optical fibre sensing system 202 may be used in both the first training dataset and the second training dataset. Accordingly, in some embodiments functionality described above in relation to the second database 214, the second preparation module 216 and the second training database 218 may be implemented via the first database 204, first preparation module 206, and first training database, respectively, as illustrated by the dashed arrows in Fig. 2a.

In the example of Fig. 2a, the first data preparation module 206 is used for preparing data in the first training dataset and the second data preparation module 216 is used for preparing data in the second training dataset. However, in other embodiments, there may be no data preparation steps. For instance, raw data stored in the first database 204 may be used as the first training dataset, i.e. data stored in the first database 204 may be used by the first training module 210 to train the first machine learning model 212. Similarly, raw data stored in the second database 214 may be used as the second training dataset, i.e. data stored in the second database 214 may be used by the second training module 220 to train the second machine learning model 222.

It should be noted that the components of the system 200 depicted in Fig. 2a (including the various databases and modules) are intended to reflect a functionality of the system 200, and may not necessarily represent a physical configuration of the system 200. The various modules and databases of the system 200 may be implemented using any suitable computer system (including a network of computer systems). For example, the various modules of the system 200 may be implemented as software modules on a computer system which is configured to execute the software modules to perform the tasks described herein. The various databases may be implemented using any suitable computer storage (memory) systems.

Following training by the second training module 220, the second machine learning model 222 is configured to generate an output based on received data that is representative of an optical fibre sensing measurement. An example use of the trained second machine learning model 222 is depicted in Fig. 2b, which shows a schematic diagram of a system 226 according to an embodiment of the invention. The system 226 comprises a preparation module 228 which is configured to receive measurement data from an optical fibre sensing system 202e. In some cases, the optical fibre sensing system 202e may be the same system whose data was used for training the second machine learning model 222. For instance, in the example of Fig. 2a where system 202d was used for training the second machine learning model 222, the system 202e may correspond to (be the same as) the system 202d. In other cases, the system 202e may be different from the system which was used for training the second machine learning model 222.

The optical fibre sensing system 202e is configured to perform a same type of measurement as the systems 202a-d described above, and is arranged to monitor a same type of system or environment. Accordingly, the data received from the system 202e by the preparation module 228 may be raw data having a same form as the data received from systems 202a-d as described above. The data received from the system 202e may correspond to data that was previously unseen by the second machine learning model 222, i.e. the received data may correspond to new data which was not used for the first or second training datasets. In some cases, the preparation module 228 may be configured to receive a stream of live (e.g. real-time) data from the optical fibre sensing system 202e. The preparation module 228 is configured to prepare the received raw data for input into the second machine learning model 222. Thus, the preparation module 228 may perform the same steps as the second preparation module 216 described above, such as data sampling, putting the data into a predetermined format, and/or applying noise reduction or smoothing algorithms to the data.

The preparation module 228 is configured to provide the prepared data to an input of the second machine learning model 222 which, in response, generates an output 230 based on the input data. In this manner, the second machine learning model 222 may generate an output substantially in real-time, based on measurement data received from the optical fibre sensing system 202e. This may facilitate monitoring of a system with the optical fibre sensing system 202e. The output generated by the second machine learning model 222 may depend on a specific task for which the second machine learning model 222 was trained. As an example, where the second training dataset was labelled to train the second machine learning model 222 as an event detection model or as an event prediction model, the output 230 generated by the second machine learning model 222 may comprise an indication of whether an event has occurred and/or a likelihood of the event occurring. As another example, where the second training dataset was labelled to train the second machine learning model 222 as a classifier, then the output 230 generated by the second machine learning model 222 may comprise a classification of the received data. As a further example, where the second machine learning model 222 is trained as an anomaly detector, the output 230 may be indicative of whether the system or environment being monitored is undergoing normal or anomalous behaviour.

Fig. 3a shows a schematic diagram of an optical fibre sensing system 300 which can be used to obtain optical fibre sensing data for use in a method or system of the invention. For example, the system 300 may correspond to one or more of the systems 202a-e described above. The system 300 is an OTDR-based system which may be adapted to perform various optical fibre sensing measurements, such as DAS, DTS or DSTS. The system comprises a laser source 302, whose output is split along two paths. The first path comprises a pulse generation stage 304 configured to receive light from the laser source 302 and generate a pulsed light signal. The pulsed signal is transmitted via an optical circulator 306 to an optical fibre 308. As the pulsed light signal travels along the optical fibre 308, parts of the signal are backscattered back along the fibre 308. Backscattered signals from the fibre 308 that reach the optical circulator 306 are then transmitted to a detection stage 310. The second path connected to the laser source 302 provides a local oscillator signal, which may be connected directly to the detection stage 310. The detection stage 310 includes suitable detection components for detecting the backscattered signals and the local oscillator signal, and for generating an output signal based on the received signals. In some cases, the detection stage 310 may be configured to interfere the backscattered signals with the local oscillator signal, and detect an interference of the backscattered signals with the local oscillator signal. This may be the case, for example, where a DAS measurement is performed.

Fig. 3b shows an example of data representative of an optical fibre measurement, that may be obtained for example from the system 300. In particular, the data in Fig. 3b corresponds to a DAS measurement, which may be indicative of an acoustic environment along the optical fibre 308. Fig. 3b shows a plot of a magnitude of a power spectral density (PSD) of the DAS measurement signal as a function of time and distance along the optical fibre 308 over a certain frequency range (about 10-60 Hz). The distance along the optical fibre 308 may be determined, for example, based on a time of receipt of the backscattered signals. Fig. 3c shows a plot of the magnitude of the PSD as a function of distance along the optical fibre 308, at a particular moment in time. In other words, the plot of Fig. 3c corresponds to a cut (sample) from the plot of Fig. 3b along the Distance axis.

Figs. 3b and 3c show example representations of the DAS data. Such representations of the DAS data may be generated, for example, by one of the preparation modules described above based on raw data received from the optical fibre sensing system 300. The data representation may then be used in one of the training datasets and/or for input into the second machine learning model. Of course, other possible representations of the measurement data are possible and could be used with the invention. For example, other types of plots or graphs could be used to represent the data, or the data could be provided in the form of a table of numerical values.

Figs. 4a and 4b illustrate a process 400 which may be used for training the first machine learning model. The process 400 may, for example, be implemented as part of step 102 of the method 100, and/or implemented by the first training module 210 described above. The process 400 is a self-supervised learning process performed using the unlabelled first training dataset. Fig. 4b shows a data element 402 in the first training dataset. The data element 402 corresponds to a representation (e.g. image) of a sample of optical fibre sensing data obtained from an optical fibre sensing system (e.g. one of systems 202a-c). The data element 402 may, for example, have been prepared by the first data preparation module 206 and stored as part of the first training dataset in the first training database 208. The data representation used for the data element 402 may correspond to that described above in relation to Fig. 3b, i.e. it may represent magnitude of a DAS signal as a function of time and distance along the fibre. The first training dataset may comprise a plurality of such data elements, each data element representing a respective sample of optical fibre sensing data.

To begin, process 400 involves applying a randomly generated mask 404 to the data element 402, to partially mask data in the data element. The mask 404 may be arranged such that a predetermined proportion of the data element 402 is covered, although the areas of the data element 402 which are covered may be random. As an example, the data element 402 may be divided into a plurality of patches, and a number of randomly selected patches are masked. The partially masked data element 402 is then provided as an input to the first machine learning model, which is trained to predict or reconstruct the data element 402. Thus, the first machine learning model may be configured as an autoencoder (or masked autoencoder) which is trained to reconstruct masked data.

In more detail, as shown in Fig. 4a, the masked data element 402 is provided as an input to the first machine learning model 406, which is configured as an autoencoder (the first machine learning model 406 may correspond to the model 212 described above). The first machine learning model 406 then encodes the masked data element 402 into a latent space 408. A decoder 410 is then configured to decode the representation in latent space 408 output by the first machine learning model 406 to obtain a series of image patches 412, which are then reconstructed into a predicted data element 414. The predicted data element 414 can then be compared to the original (unmasked) data element 402, in order to refine the first machine learning model 406. Many iterations of this training process may be performed with each of the data elements in the first training dataset, each time applying a randomly generated mask to the data element and then reconstructing the data element using the first machine learning model 406 and the decoder 410. The first machine learning model 406 may be trained in this manner, until a desired accuracy level of the predicted data elements 414 are reached. The autoencoder may contain a vision transformer (ViT) network. Such a ViT may be particularly suited to a case where the optical fibre sensing data is represented as a plot or image, e.g. as shown in Fig. 3b.

Once the first machine learning model 406 has been trained, it can be used to form a second machine learning model 502, as shown in Fig. 5. The second machine learning model 502 includes the first machine learning model 406 (i.e. the encoder from process 400), and a decision model 502 which is connected to an output of the first machine learning model 406. In particular, the decision model 504 is arranged to take as an input the representation in latent space 408 output by the first machine learning model 406. Then, based on the latent space representation received from the first machine learning model 406, the decision model 504 is configured to generate an output 506. The decision model 504 may correspond, for example, to an ANN such as a CNN.

Fig. 5 illustrates a process 500 for training the second machine learning model 502. Training of the second machine learning model 502 is performed using the second training dataset. A data element 508 is provided to an input of the second machine learning model 502, which may correspond to the input of the first machine learning model 406. Similarly to the data element 402 described above, the data element 508 is a representation (e.g. image) of a sample of optical fibre sensing data obtained from an optical fibre sensing system (e.g. system 202d). The data element 508 may, for example, have been prepared by the second data preparation module 216 and stored as part of the second training dataset in the second training database 218. The data representation used for the data element 508 from the second training dataset is the same as for data element 402 from the first training dataset, e.g. corresponding to the data representation described above in relation to Fig. 3b. However, unlike in process 400, the data element 508 is not masked, i.e. the complete data element 508 is provided to the second machine learning model 502. In line with the above, following inputting of the data element 508 into the second machine learning model 502, an output 506 is generated by the decision model 504. The output 506 may be used as feedback in the training process, to refine (adjust) the second machine learning model 502. The process 500 may be performed over many iterations with each of the data elements in the second training dataset, to optimise an accuracy of the output 506 provided by the model. In some cases, the first machine learning model 406 may remain fixed over the course training of the second machine learning model 502. In other words, only parameters in the decision model 504 may be adjusted as part of the training process 500, whilst parameters in the first machine learning model 406 remain fixed.

As noted above, data elements in the second training dataset may be labelled. Accordingly, the process 500 may involve a supervised learning process, where the labelled data elements are used for supervised learning of the second machine learning model. In other words, the labelled data elements may act as ground truth data for training the second machine learning model 506. Supervised learning techniques may be used, for example, where the second machine learning model 502 is trained as a classifier, or as an event detection or prediction model. For example, data elements in the second training dataset may be labelled to classify the data, and/or to indicate whether or not a data element corresponds to a predetermined event. In such a case, the decision model 504 may be a logistic regression model, for solving classification problems. Supervised learning techniques may also be used for predicting a property or variable (e.g. an attribute) of a system or environment monitored by the optical fibre sensing system. For example, data elements in the second training dataset may be labelled to indicate a value of the property or variable corresponding to a time when the data was recorded. Supervised learning techniques can further be used for anomaly detection. In such a case, data elements in the second training dataset may be labelled to indicate whether the data elements correspond to normal or anomalous behaviour of the system or environment monitored by the optical fibre sensing system. Examples of suitable supervised machine learning models which could be used for the decision model 504 include ANNs, CNNs, transformer networks, and SVMs.

Alternatively, where data elements in the second training dataset are unlabelled, an unsupervised learning process may be performed. For example, unsupervised learning may be used to train the second machine learning model 502 as an anomaly detector, to predict if received data corresponds to a normal or anomalous behaviour. For instance, nearest neighbour anomaly detection may be used. Nearest neighbour anomaly detection techniques rely on an assumption that 'normal' data instances occur in dense neighbourhoods, while anomalies occur far from their closest neighbours. Accordingly, a distance or similarity measure between two data instances can be defined and computed in various ways, such as the Euclidean distance.

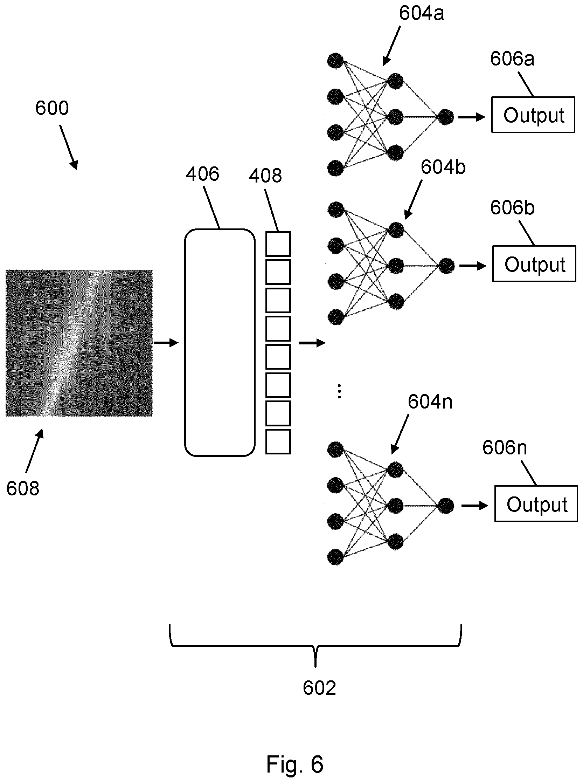

Fig. 6 illustrates a process 600 for training a second machine learning model 602. The process 600 is based on the same principles as the process 500 described above, except that the second machine learning model 602 includes multiple decision models 604a-n. Thus, whereas the second machine learning model 502 includes a single decision model 504 connected to the output of the first machine learning model 406, the second machine learning model 602 includes a plurality of decision models 604a-n connected to an output of the first machine learning model 406. Each of the decision models 604a-n is configured to generate a respective output 606a, based on an input received from the first machine learning model 406. In the example shown, each of the decision models 604a-n is arranged to take as its input the same output in latent space 408 from the first machine learning model 406. However, in other examples, the decision models 604a-n may be arranged to receive outputs from different layers in the first machine learning model 406.

Each of the decision models 604a-n may be configured to perform a respective task. For example, a first decision model 604a may be configured as a classifier, a second decision model 604 may be configured as an event detector, and another decision model 604n can be configured as an anomaly detector. Of course, different numbers of decision models may be connected to the first machine learning model 406, depending on the types and numbers of tasks to be performed. Each of the decision models 604a-n may be trained independently, using a respective second training dataset. Thus, during training of the one of the decision models (e.g. model 604a), the first machine learning model 406 and the other decision models (e.g. models 604b-n) may remain fixed. In this manner, each of the decision models 604a-n can be trained in turn, using data elements 608 from the corresponding second training dataset for each decision model. Each respective second training dataset may be adapted to the type of training and task to be performed by the corresponding decision model. For example, the second training dataset for a particular decision model may be labelled or unlabelled, depending on whether the training for that model is to be supervised or not. Once the second machine learning model 602 has been trained, it can take a data element as an input, and provide a plurality of outputs 606a-n, i.e. one from each decision model 604a-n.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A method (100) of training a machine learning model for use with data representative of optical fibre sensing measurements, the method comprising:
training a first machine learning model (212) using a first training dataset, wherein the first training dataset comprises data representative of optical fibre sensing measurements, and wherein the first training dataset is unlabelled; and
using a second training dataset, training a second machine learning model (222) that incorporates at least part of the trained first machine learning model, wherein the second training dataset comprises data representative of optical fibre sensing measurements, the second training dataset being smaller than, or equal in size to, the first training dataset;
wherein the second machine learning model is configured to generate an output based on received data that is representative of an optical fibre sensing measurement performed by an optical fibre sensing system arranged to monitor a system or environment, the output being indicative of one or more of a property or variable for the monitored system or environment, an event detection, an event prediction, and an anomaly detection;
the method being **characterised in that**:
the first machine learning model is trained with the first training dataset via a self-supervised learning process; and
the self-supervised learning process comprises partially masking data in the first training dataset, and training the first machine learning model to reconstruct data in the first training dataset from the partially masked data.

2. A method according to claim 1, wherein the second machine learning model is trained using a supervised learning process, and wherein the second training dataset comprises labelled data used in the supervised learning process.

3. A method according to claim 2, wherein:
the labelled data comprises data elements that are labelled to indicate an attribute of the data elements; and
the output generated by the second machine learning model is indicative of an attribute of the received data.

4. A method according to any preceding claim, wherein the second machine learning model is trained using an unsupervised learning process, and wherein the second training dataset comprises unlabelled data used in the unsupervised learning process.

5. A method according to any preceding claim, wherein the second machine learning model is configured as an anomaly detector.

6. A method according to any preceding claim, wherein the first training dataset was collected using two or more different optical fibre sensing systems (202a, 202b, 202c).

7. A method according to claim 6, wherein the two or more different optical fibre sensing systems are located at different geographical sites; and/or
wherein the second training dataset was collected using fewer optical fibre sensing systems than the first training dataset.

8. A method according to any preceding claim, wherein the second machine learning model comprises the trained first machine learning model and a decision model (224) which is connected to an output of the first machine learning model.

9. A method according to any of claims 1 to 7, wherein:
the second machine learning model (602) comprises the trained first machine learning model (406) and two or more decision models (604a, 604b, 604n), each of the two or more decision models being connected to an output of the first machine learning model; and
each of the two or more decision models is configured to perform a respective task and is trained using a respective second training dataset.

10. A method according to any preceding claim, wherein the trained first machine learning model remains fixed during training of the second machine learning model.

11. A method according to any of claims 1 to 9, wherein one or more parameters of the trained first machine learning model are adjusted during training of the second machine learning model.

12. A method according to any preceding claim, wherein the first training dataset further comprises data indicative of environmental conditions associated with recording of data in the first training dataset, and/or the second training dataset further comprises data indicative of environmental conditions associated with recording of data in the second training dataset.

13. A method of analysing data representative of an optical fibre sensing measurement, the method comprising:
receiving, by a machine learning model, data representative of an optical fibre sensing measurement performed by an optical fibre sensing system arranged to monitor a system or environment, wherein the machine learning model was trained using a method according to any preceding claim; and
in response to receiving the data, generating, by the machine learning model, an output that is indicative of one or more of a property or variable for the monitored system or environment, an event detection, an event prediction, and an anomaly detection.

14. A method according to claim 13, wherein the output generated by the machine learning model is indicative of a probability that the received data corresponds to a predetermined condition, and/or the output generated by the machine learning model is indicative of an attribute of the data.

15. A computer-implemented system (200) for training a machine learning model, the system being configured to:
train a first machine learning model (212) using a first training dataset , wherein the first training dataset comprises data representative of optical fibre sensing measurements, and wherein the first training dataset is unlabelled; and
with a second training dataset, train a second machine learning model (222) that incorporates at least part of the trained first machine learning model, wherein the second training dataset comprises data representative of optical fibre sensing measurements, the second training dataset being smaller than, or equal in size to, the first training dataset, and wherein the second machine learning model is configured to generate an output based on received data that is representative of an optical fibre sensing measurement performed by an optical fibre sensing system arranged to monitor a system or environment, the output being indicative of one or more of a property or variable for the monitored system or environment, an event detection, an event prediction, and an anomaly detection;
**characterised in that** the system is further configured to:
train the first machine learning model with the first training dataset via a self-supervised learning process; and
the self-supervised learning process comprises partially masking data in the first training dataset, and training the first machine learning model to reconstruct data in the first training dataset from the partially masked data.

16. A computer-implemented system (226) for analysing data representative of an optical fibre sensing measurement performed by an optical fibre sensing system arranged to monitor a system or environment, the system comprising a machine learning model (222) that was trained using a method according to any of claims 1 to 14.

## Patentansprüche

1. Verfahren (100) zum Trainieren eines Modells für maschinelles Lernen zur Verwendung mit Daten, die repräsentativ für Glasfaserabfühlmessungen sind, wobei das Verfahren Folgendes umfasst:
Trainieren eines ersten Modells (212) für maschinelles Lernen unter Verwendung eines ersten Training-Datensatzes, wobei der erste Training-Datensatz Daten umfasst, die repräsentativ für Glasfaserabfühlmessungen sind, und wobei der erste Training-Datensatz nicht markiert ist; und
unter Verwendung eines zweiten Training-Datensatzes Trainieren eines zweiten Models (222) für maschinelles Lernen, das zumindest einen Teil des trainierten ersten Modells für maschinelles Lernen einbezieht, wobei der zweite Training-Datensatz Daten umfasst, die repräsentativ für Glasfaserabfühlmessungen sind, und wobei der zweite Training-Datensatz eine kleinere oder gleiche Größe verglichen mit dem ersten Training-Datensatz aufweist;
wobei das zweite Modell für maschinelles Lernen dazu ausgelegt ist, eine Ausgabe beruhend auf empfangenen Daten zu erzeugen, die repräsentativ für Glasfaserabfühlmessungen sind, welche durch ein Glasfaserabfühlsystem durchgeführt wurden, das zum Überwachen eines Systems oder einer Umgebung angeordnet ist, wobei die Ausgabe eines oder mehrere aus einer Eigenschaft oder einer Variable für das überwachte System oder die überwachte Umgebung, einer Ereignisdetektion, einer Ereignisvorhersage und einer Anomaliedetektion angibt;
wobei das Verfahren **dadurch gekennzeichnet ist, dass**:
das erste Modell für maschinelles Lernen mit dem ersten Training-Datensatz über einen selbstüberwachenden Lernprozess trainiert wird; und
der selbstüberwachende Lernprozess ein teilweises Maskieren von Daten im ersten Training-Datensatz und das Trainieren des ersten Modells für maschinelles Lernen zum Rekonstruieren von Daten im ersten Training-Datensatz aus den teilweise maskierten Daten umfasst.

2. Verfahren nach Anspruch 1, wobei das zweite Modell für maschinelles Lernen unter Verwendung eines überwachten Lernprozesses trainiert wird und wobei der zweite Training-Datensatz markierte Daten umfasst, die im überwachten Lernprozess verwendet werden.

3. Verfahren nach Anspruch 2, wobei:
die markierten Daten Datenelemente umfassen, die markiert sind, um ein Attribut der Datenelemente anzugeben; und
die vom zweiten Modell für maschinelles Lernen erzeugte Ausgabe ein Attribut der empfangenen Daten angibt.

4. Verfahren nach einem der vorangegangenen Ansprüche, wobei das zweite Modell für maschinelles Lernen unter Verwendung eines nicht überwachten Lernprozesses trainiert wird und wobei der zweite Training-Datensatz nichtmarkierte Daten umfasst, die im nicht überwachten Lernprozess verwendet werden.

5. Verfahren nach einem der vorangegangenen Ansprüche, wobei das zweite Modell für maschinelles Lernen als Anomaliedetektor ausgelegt ist.

6. Verfahren nach einem der vorangegangenen Ansprüche, wobei der erste Training-Datensatz unter Verwendung von zwei oder mehr verschiedenen Glasfaserabfühlsystemen (202a, 202b, 202c) gesammelt wurde.

7. Verfahren nach Anspruch 6, wobei die zwei oder mehr verschiedenen Glasfaserabfühlsysteme sich an verschiedenen geografischen Orten befinden; und/oder
wobei der zweite Training-Datensatz unter Verwendung von weniger Glasfaserabfühlystemen als der erste Training-Datensatz gesammelt wurde.

8. Verfahren nach einem der vorangegangenen Ansprüche, wobei das zweite Modell für maschinelles Lernen das trainierte erste Modell für maschinelles Lernen und ein Entscheidungsmodell (224) umfasst, das mit einer Ausgabe des ersten Modells für maschinelles Lernen verbunden ist.

9. Verfahren nach einem der Ansprüche 1 bis 7, wobei:
das zweite Modell für maschinelles Lernen (602) das trainierte erste Modell (406) für maschinelles Lernen und zwei oder mehrere Entscheidungsmodelle (604a, 604b, 604n) umfasst, wobei jedes der zwei oder mehreren Entscheidungsmodelle mit einer Ausgabe des ersten Modells für maschinelles Lernen verbunden ist; und
jedes der zwei oder mehreren Entscheidungsmodelle dazu ausgelegt ist, eine entsprechende Aufgabe auszuführen, und unter Verwendung eines entsprechenden zweiten Training-Datensatzes trainiert wird.

10. Verfahren nach einem der vorangegangenen Ansprüche, wobei das trainierte erste Modelle für maschinelles Lernen während des Trainierens des zweiten Modells für maschinelles Lernen festgelegt bleibt.

11. Verfahren nach einem der Ansprüche 1 bis 9, wobei ein oder mehrere Parameter des trainierten ersten Modells für maschinelles Lernen während des Trainierens des zweiten Modells für maschinelles Lernen angepasst werden.

12. Verfahren nach einem der vorangegangenen Ansprüche, wobei der erste Training-Datensatz ferner Daten umfasst, die Umweltbedingungen angeben, welche einer Aufzeichnung von Daten im ersten Training-Datensatz zugeordnet sind, und/oder wobei der zweite Training-Datensatz ferner Daten umfasst, die Umweltbedingungen angeben, welche einer Aufzeichnung von Daten im zweiten Training-Datensatz zugeordnet sind.

13. Verfahren zum Analysieren von Daten, die repräsentativ für eine Glasfaserabfühlmessung sind, wobei das Verfahren Folgendes umfasst:
durch ein Modell für maschinelles Lernen Empfangen von Daten, die repräsentativ für Glasfaserabfühlmessungen sind, welche durch ein Glasfaserabfühlsystem durchgeführt wurden, das zum Überwachen eines Systems oder einer Umgebung angeordnet ist, wobei das Modell für maschinelles Lernen unter Verwendung eines Verfahrens nach einem der vorangegangenen Ansprüche trainiert wurde; und
als Antwort auf das Empfangen von Daten Erzeugen, durch das Modell für maschinelles Lernen, einer Ausgabe, die eines oder mehrere aus einer Eigenschaft oder einer Variable für das überwachte System oder die überwachte Umgebung, einer Ereignisdetektion, einer Ereignisvorhersage und einer Anomaliedetektion angibt.

14. Verfahren nach Anspruch 13, wobei eine vom Modell für maschinelles Lernen erzeugte Ausgabe die Wahrscheinlichkeit dafür angibt, dass die empfangenen Daten einer vorbestimmten Bedingung entsprechen, und/oder wobei die vom Modell für maschinelles Lernen erzeugte Ausgabe ein Attribut der Daten angibt.

15. Computerimplementiertes System (200) zum Trainieren eines Modells für maschinelles Lernen, wobei das System für Folgendes ausgelegt ist:
Trainieren eines ersten Modells (212) für maschinelles Lernen unter Verwendung eines ersten Training-Datensatzes, wobei der erste Training-Datensatz Daten umfasst, die repräsentativ für Glasfaserabfühlmessungen sind, und wobei der erste Training-Datensatz nicht markiert ist; und
unter Verwendung eines zweiten Training-Datensatzes Trainieren eines zweiten Models (222) für maschinelles Lernen, das zumindest einen Teil des trainierten ersten Modells für maschinelles Lernen einbezieht, wobei der zweite Training-Datensatz Daten umfasst, die repräsentativ für Glasfaserabfühlmessungen sind, und der zweite Training-Datensatz eine kleinere oder gleiche Größe verglichen mit dem ersten Training-Datensatz aufweist, und wobei das zweite Modell für maschinelles Lernen dazu ausgelegt ist, eine Ausgabe beruhend auf empfangenen Daten zu erzeugen, die repräsentativ für Glasfaserabfühlmessungen sind, welche durch ein Glasfaserabfühlsystem durchgeführt wurden, das zum Überwachen eines Systems oder einer Umgebung angeordnet ist, wobei die Ausgabe eines oder mehrere aus einer Eigenschaft oder einer Variable für das überwachte System oder die überwachte Umgebung, einer Ereignisdetektion, einer Ereignisvorhersage und einer Anomaliedetektion angibt;
**dadurch gekennzeichnet, dass** das System ferner für Folgendes ausgelegt ist
Trainieren des ersten Modells für maschinelles Lernen mit dem ersten Training-Datensatz über einen selbstüberwachenden Lernprozess; und wobei
der selbstüberwachende Lernprozess ein teilweises Maskieren von Daten im ersten Training-Datensatz und das Trainieren des ersten Modells für maschinelles Lernen zum Rekonstruieren von Daten im ersten Training-Datensatz aus den teilweise maskierten Daten umfasst.

16. Computerimplementiertes System (226) zum Analysieren von Daten, die repräsentativ für Glasfaserabfühlmessungen sind, welche durch ein Glasfaserabfühlsystem durchgeführt wurden, das zum Überwachen eines Systems oder einer Umgebung angeordnet ist, wobei das System ein Modell (222) für maschinelles Lernen umfasst, das unter Verwendung eines Verfahrens nach einem der Ansprüche 1 bis 14 trainiert wird.

## Revendications

1. Procédé (100) de formation d'un modèle d'apprentissage automatique destiné à être utilisé avec des données représentatives de mesures de détection par fibre optique, le procédé comprenant les étapes consistant à :
former un premier modèle d'apprentissage automatique (212) en utilisant un premier ensemble de données de formation, dans lequel le premier ensemble de données de formation comprend des données représentatives de mesures de détection par fibre optique, et dans lequel le premier ensemble de données de formation n'est pas marqué ; et
utiliser un second ensemble de données de formation, former un second modèle d'apprentissage automatique (222) qui incorpore au moins une partie du premier modèle d'apprentissage automatique formé, dans lequel le second ensemble de données de formation comprend des données représentatives de mesures de détection par fibre optique, le second ensemble de données de formation étant plus petit que le premier ensemble de données de formation, ou de la même taille ;
dans lequel le second modèle d'apprentissage automatique est configuré pour générer une sortie sur la base de données reçues qui est représentative d'une mesure de détection par fibre optique effectuée par un système de détection à fibre optique agencé pour surveiller un système ou un environnement, la sortie étant indicative d'une ou plusieurs parmi une propriété ou une variable pour le système ou l'environnement surveillé, une détection d'événement, une prédiction d'événement et une détection d'anomalie ;
le procédé étant **caractérisé en ce que** :
le premier modèle d'apprentissage automatique est formé avec le premier ensemble de données de formation via un processus d'apprentissage auto-supervisé ; et
le processus d'apprentissage auto-supervisé comprend un masquage partiel de données dans le premier ensemble de données de formation, et une formation du premier modèle d'apprentissage automatique pour reconstruire des données dans le premier ensemble de données de formation à partir des données partiellement masquées.

2. Procédé selon la revendication 1, dans lequel le second modèle d'apprentissage automatique est formé en utilisant un processus d'apprentissage supervisé, et dans lequel le second ensemble de données de formation comprend des données marquées utilisées dans le processus d'apprentissage supervisé.

3. Procédé selon la revendication 2, dans lequel :
les données marquées comprennent des éléments de données qui sont marqués pour indiquer un attribut des éléments de données ; et
la sortie générée par le second modèle d'apprentissage automatique est indicative d'un attribut des données reçues.

4. Procédé selon l'une quelconque des revendications précédentes, dans lequel le second modèle d'apprentissage automatique est formé en utilisant un processus d'apprentissage non supervisé, et dans lequel le second ensemble de données de formation comprend des données non marquées utilisées dans le processus d'apprentissage non supervisé.

5. Procédé selon l'une quelconque des revendications précédentes, dans lequel le second modèle d'apprentissage automatique est configuré sous la forme d'un détecteur d'anomalie.

6. Procédé selon l'une quelconque des revendications précédentes, dans lequel le premier ensemble de données d'apprentissage a été collecté en utilisant deux systèmes de détection à fibre optique différents (202a, 202b, 202c) ou plus.

7. Procédé selon la revendication 6, dans lequel les deux systèmes de détection à fibre optique différents ou plus sont situés au niveau de sites géographiques différents ; et/ou
dans lequel le second ensemble de données de formation a été collecté en utilisant moins de systèmes de détection à fibre optique que le premier ensemble de données de formation.

8. Procédé selon l'une quelconque des revendications précédentes, dans lequel le second modèle d'apprentissage automatique comprend le premier modèle d'apprentissage automatique formé et un modèle de décision (224) qui est connecté à une sortie du premier modèle d'apprentissage automatique.

9. Procédé selon l'une quelconque des revendications 1 à 7, dans lequel :
le second modèle d'apprentissage automatique (602) comprend le premier modèle d'apprentissage automatique formé (406) et deux modèles de décision (604a, 604b, 604n) ou plus, chacun des deux modèles de décision ou plus étant connecté à une sortie du premier modèle d'apprentissage automatique ; et
chacun des deux modèles de décision ou plus est configuré pour effectuer une tâche respective et est formé en utilisant un second ensemble de données de formation respectif.

10. Procédé selon l'une quelconque des revendications précédentes, dans lequel le premier modèle d'apprentissage automatique formé reste fixe pendant la formation du second modèle d'apprentissage automatique.

11. Procédé selon l'une quelconque des revendications 1 à 9, dans lequel un ou plusieurs paramètres du premier modèle d'apprentissage automatique formé sont ajustés pendant la formation du second modèle d'apprentissage automatique.

12. Procédé selon l'une quelconque des revendications précédentes, dans lequel le premier ensemble de données de formation comprend en outre des données indicatives de conditions environnementales associées à l'enregistrement de données dans le premier ensemble de données de formation, et/ou le second ensemble de données de formation comprend en outre des données indicatives de conditions environnementales associées à l'enregistrement de données dans le second ensemble de données de formation.

13. Procédé d'analyse de données représentatives d'une mesure de détection par fibre optique, le procédé comprenant les étapes consistant à :
recevoir, par l'intermédiaire d'un modèle d'apprentissage automatique, des données représentatives d'une mesure de détection par fibre optique effectuée par un système de détection à fibre optique agencé pour surveiller un système ou un environnement, dans lequel le modèle d'apprentissage automatique a été formé en utilisant un procédé selon l'une quelconque des revendications précédentes ; et
en réponse à la réception des données, générer, par l'intermédiaire du modèle d'apprentissage automatique, une sortie qui est indicative d'une ou plusieurs parmi une propriété ou une variable pour le système ou l'environnement surveillé, une détection d'événement, une prédiction d'événement, et une détection d'anomalie.

14. Procédé selon la revendication 13, dans lequel la sortie générée par le modèle d'apprentissage automatique est indicative d'une probabilité que les données reçues correspondent à une condition prédéterminée, et/ou la sortie générée par le modèle d'apprentissage automatique est indicative d'un attribut des données.

15. Système mis en œuvre par ordinateur (200) pour former un modèle d'apprentissage automatique, le système étant configuré pour :
former un premier modèle d'apprentissage automatique (212) en utilisant un premier ensemble de données de formation, dans lequel le premier ensemble de données de formation comprend des données représentatives de mesures de détection par fibre optique, et dans lequel le premier ensemble de données de formation n'est pas marqué ; et
à l'aide d'un second ensemble de données de formation, former un second modèle d'apprentissage automatique (222) qui incorpore au moins une partie du premier modèle d'apprentissage automatique formé, dans lequel le second ensemble de données de formation comprend des données représentatives de mesures de détection par fibre optique, le second ensemble de données de formation étant plus petit que le premier ensemble de données de formation, ou de la même taille, et dans lequel le second modèle d'apprentissage automatique est configuré pour générer une sortie sur la base de données reçues qui est représentative d'une mesure de détection par fibre optique effectuée par un système de détection à fibre optique agencé pour surveiller un système ou un environnement, la sortie étant indicative d'une ou plusieurs parmi une propriété ou une variable pour le système ou l'environnement surveillé, une détection d'événement, une prédiction d'événement et une détection d'anomalie ;
**caractérisé en ce que** le processeur est en outre configuré pour :
former le premier modèle d'apprentissage automatique avec le premier ensemble de données de formation via un processus d'apprentissage auto-supervisé ; et
le processus d'apprentissage auto-supervisé comprend un masquage partiel de données dans le premier ensemble de données de formation, et une formation du premier modèle d'apprentissage automatique pour reconstruire des données dans le premier ensemble de données de formation à partir des données partiellement masquées.

16. Système mis en œuvre par ordinateur (226) pour analyser des données représentatives d'une mesure de détection par fibre optique effectuée par un système de détection à fibre optique agencé pour surveiller un système ou un environnement, le système comprenant un modèle d'apprentissage automatique (222) qui a été formé en utilisant un procédé selon l'une quelconque des revendications 1 à 14.
